# FASCICULE DE BREVET EUROPEEN

(11) **EP 1 851 380 B1**
(45) Date de publication et mention de la délivrance du brevet: **13.03.2013**
(21) Numéro de dépôt: 06709463.1
(22) Date de dépôt: 31.01.2006
(51) Int. Cl.: D21H 21/18, D21H 23/04, D21H 17/42, D21H 17/44, D21H 17/45

(54) **PROCEDE DE FABRICATION DE PAPIER ET CARTON DE GRANDE RESISTANCE A SEC ET PAPIERS ET CARTONS AINSI OBTENUS**
VERFAHREN ZUR HERSTELLUNG VON PAPIER UND KARTON MIT HOHER TROCKENFESTIGKEIT SOWIE DAMIT HERGESTELLTES PAPIER UND KARTON
METHOD FOR MAKING PAPER AND CARDBOARD WITH HIGH DRY STRENGTH AND RESULTING PAPERS AND CARDBOARDS

(30) Priorité: 24.02.2005 FR 0550514
(43) Date de publication de la demande: 07.11.2007
(73) Titulaire: S.P.C.M. SA, 42160 Andrezieux Boutheon (FR)
(72) Inventeur: HUND, René, F-42390 Villars (FR); JEHN-RENDU, Christian, F-42680 St Marcellin En Forez (FR); MORETTON, Fabrice, F-69008 Lyon (FR)
(74) Mandataire: Denjean, Eric
(86) Numéro de dépôt international: PCT/FR2006/050079
(87) Numéro de publication internationale: WO 2006/090076

(56) Documents cités:
- US-A- 5 185 062
- US-A- 5 584 966
- US-A1- 2004 118 540

## Description

L'invention concerne un papier présentant une résistance à sec améliorée ainsi que son procédé de fabrication caractérisé par l'utilisation d'un système tri-composantes comprenant au moins deux polymères portant majoritairement des charges cationiques et au moins un polymère globalement anionique. Ces polymères s'associent pour exercer une action synergique sur la résistance à sec de ce papier.

Plus précisément, l'invention concerne un procédé amélioré de fabrication du papier et/ou du carton et analogues, selon lequel on utilise au moins trois (co)polymères pour améliorer les caractéristiques de résistance à sec lors de la fabrication de feuilles cellulosiques respectivement :
- au moins un premier agent correspond à un (co)polymère ayant une densité de charge cationique supérieure à 1 meq/g et présentant des fonctions amine primaire,
- au moins un second agent correspondant à un (co)polymère organique synthétique ayant une densité de charge cationique supérieure à 0,1 meq/g
- et au moins un troisième agent correspondant à un (co)polymère ayant une densité de charge anionique supérieure à 0,1 meq/g.

Selon l'invention, le (co)polymère présentant des fonctions amine primaire est un polymère organique obtenu de façon classique et bien connue par l'homme de métier comme par exemple - par une réaction de dégradation d'Hofmann sur un (co)polymère base - ou par l'hydrolyse acide ou basique d'un (co)polymère base de polyvinylformamide, et ses dérivés.

Ce système à 3 composantes peut être utilisé avec succès pour la fabrication de papiers et cartons d'emballage, de papiers supports de couchage, de tout type de papiers, cartons ou analogues nécessitant une résistance à sec améliorée.

On recherche des papiers et cartons qui sont de plus en plus résistants, notamment pour l'industrie de l'emballage.

La résistance à sec du papier est par définition la résistance de la feuille normalement sèche. Les valeurs de résistance à l'éclatement et à la traction donnent traditionnellement une mesure de la résistance à sec du papier.

Il est bien connu d'utiliser des polymères cationiques solubles dans l'eau pour améliorer les caractéristiques de résistance du papier. De par leur nature, ils peuvent se fixer directement sur la cellulose anionique et lui conférer une charge cationique de telle sorte qu'en association avec des polymères anioniques, il y ait fixation de ces derniers sur les fibres cellulosiques, améliorant ainsi la résistance à sec de la feuille.

Les polymères cationiques les plus communément utilisés sont des composés de type amidon cationique, polyamide épichlorhydrine (PAE), polyamide amine épichlorhydrine (PAAE) ou des polyacrylamides cationiques éventuellement glyoxalés.

Les procédés décrits dans l'art antérieur utilisant ces polymères ne sont cependant pas entièrement satisfaisants, notamment en ce qui concerne les quantités de polymères requises et/ou les caractéristiques de résistance humide engendrées, entraînant des difficultés de process telles que la trituration en pâte de la feuille en vue d'un recyclage des cassés sec. Ce dernier inconvénient est en particulier observé lorsqu'on met en oeuvre le procédé décrit dans le document US 2004/118540.

Le document US 5 584 966 décrit un procédé de fabrication de papier dans lequel la formation de la feuille est améliorée associant un microgel de polysilicate, un polymère cationique, un polymère anionique et éventuellement des polyamines pourvus de fonction amine secondaire. On notera que ce brevet ne vise par l'amélioration des propriétés mécaniques de la feuille, mais cible l'amélioration de la formation (qualité visuelle).

La résistance à l'éclatement des feuilles cellulosiques obtenue grâce à l'emploi d'agents de résistance à sec doit par ailleurs satisfaire un certain nombre d'exigences. Elle doit notamment être sans inconvénient sur le plan toxicologique et présenter une bonne compatibilité avec les autres agents intervenant dans la fabrication de la feuille.

Il a déjà été proposé, notamment dans les demandes de brevet JP 58-60094 (Hamano), JP 04-57992 (Mitsui), US 2004/118540 (Kimberly Clark) d'associer, dans des systèmes de type bi-composants, des polymères présentant des fonctions de type vinylamine avec un polymère anionique, cette association visant à proposer un système performant pour la résistance à sec de la feuille de papier.

L'invention vise un procédé de fabrication du papier caractérisé par l'utilisation d'un système non plus bi mais tri-composantes comprenant au moins deux polymères portant majoritairement des charges cationiques et au moins un polymère globalement anionique, qui améliore de façon surprenante les propriétés de résistance à sec du papier tout en étant économiquement moins cher.

La demanderesse a trouvé et mis au point un procédé amélioré de fabrication d'une feuille de papier et/ou de carton et analogues, selon lequel, avant formation de ladite feuille, on ajoute à la suspension fibreuse, séparément ou en mélange, dans un ordre quelconque d'introduction, en un ou plusieurs points d'injection, au moins trois agents de résistance à sec respectivement :
- un premier agent correspondant à un (co)polymère ayant une densité de charge cationique supérieure à 1 meq/g, et introduit dans la suspension à raison de 100 g/t à 20000 g/t en poids de matière active (polymère) par rapport au poids sec de la suspension fibreuse,
- un second agent correspondant à un (co)polymère organique synthétique ayant une densité de charge cationique supérieure à 0,1 meq/g, et introduit dans la suspension à raison de 100 g/t à 20000 g/t en poids de matière active (polymère) par rapport au poids sec de la suspension fibreuse, ledit second agent comprenant 1 à 100 mol % d'au moins un monomère possédant une charge cationique choisi dans le groupe comprenant l'acrylate de dimethylaminoethyl (ADAME) et/ou le methacrylate de dimethylaminoethyle (MADAME) quaternisés ou salifiés, le chlorure de dimethyldiallylammonium (DADMAC), le chlorure d'acrylamido propyltrimethyl ammonium (APTAC) et/ou le chlorure de methacrylamido propyltrimethyl ammonium (MAPTAC),
- et un troisième agent correspondant à un (co)polymère ayant une densité de charge anionique supérieure à 0,1 meq/g, et introduit dans la suspension à raison de 100 g/t à 20000 g/t en poids de matière active (polymère) par rapport au poids sec de la suspension fibreuse, ledit troisième agent comprenant 1 à 100 mot % de :
   ○ au moins un monomère anionique possédant une fonction carboxylique choisi dans le groupe comprenant acide acrylique, acide methacrylique, acide maléique, acide itaconique et leurs sels...,
   ○ et/ou un monomère anionique possédant une fonction acide sulfonique choisi dans le groupe comprenant acide 2-acrylamido-2-méthylpropane sulfonique (AMPS), acide vinyl sulfonique, acide méthallyl sulfonique et leurs sels...,
   o et/ou au moins un monomère anionique possédant une fonction acide phosphonique,
caractérisé en ce que le premier agent présente des fonctions amine primaire et
(i) soit correspond à un produit de dégradation d'Hofmann sur un (co)polymère base constitué :
   - d'au moins un monomère non ionique choisi dans le groupe comprenant l'acrylamide et/ou le méthacrylamide, le N,N diméthylacrylamide et/ou l'acrylonitrile,
   - et éventuellement :
      ■ d'au moins un monomère éthylénique cationique non saturé, choisi dans le groupe comprenant les monomères de type dialkylaminoalkyl (meth)acrylamide, diallylamine, methyldiallylamine et leurs sels d'ammonium quaternaire ou d'acides,
      ■ et/ou d'au moins un monomère non ionique choisi dans le groupe comprenant le N-vinyl acetamide, N-vinyl formamide, la N-vinylpyrrolidone et/ou le vinyl acétate,
      ■ et/ou d'au moins un monomère anionique de type acide ou anhydride choisi par exemple dans le groupe comprenant, l'acide (méth)acrylique, l'acide acrylamidomethylpropane sulfonique, l'acide itaconique, l'anhydride maléique l'acide maléique, l'acide méthallyl sulfonique, l'acide vinyl-sulfonique et leurs sels,
(ii) soit est obtenu par hydrolyse acide ou basique d'un (co)polymère base constitué :
   - d'au moins un monomère non ionique choisi dans le groupe comprenant la N-vinylformamide, N-vinylacétamide, N-vinylpyrrolidone, et N-vinylacétate.
   - et éventuellement :
      ■ d'au moins un monomère éthylénique cationique non saturé, choisi dans le groupe comprenant les monomères de type dialkylaminoalkyl (meth)acrylamide, diallylamine, methyldiallylamine et leurs sels d'ammonium quaternaire ou d'acides,
      ■ et/ou d'au moins un monomère non ionique choisi dans le groupe comprenant l'acrylamide (et/ou le méthacrylamide), le N,N diméthylacrylamide et/ou l'acrylonitrile,
      ■ et/ou d'au moins un monomère anionique de type acide ou anhydride choisi par exemple dans le groupe comprenant, l'acide (méth)acrylique, l'acide acrylamidomethylpropane sulfonique, l'acide itaconique, l'anhydride maléique, l'acide maléique, l'acide méthallyl sulfonique, l'acide vinyl-sulfonique et leurs sels.
   - un premier agent correspondant à un (co)polymère ayant une densité de charge cationique supérieure à 1 meq/g, et introduit dans la suspension à raison de 100 g/t à 20000 g/t en poids de matière active (polymère) par rapport au poids sec de la suspension fibreuse,
   - un second agent correspondant à un (co)polymère organique synthétique ayant une densité de charge cationique supérieure à 0,1 meq/g, et introduit dans la suspension à raison de 100 g/t à 20000 g/t en poids de matière active (polymère) par rapport au poids sec de la suspension fibreuse, ledit second agent comprenant 1 à 100 mol % d'au moins un monomère possédant une charge cationique choisi dans le groupe comprenant l'acrylate de dimethylaminoethyl (ADAME) et/ou le methacrylate de dimethylaminoethyle (MADAME) quaternisés ou salifiés, le chlorure de dimethyldiallylammonium (DADMAC), le chlorure d'acrylamido propyltrimethyl ammonium (APTAC) et/ou le chlorure de methacrylamido propyltrimethyl ammonium (MAPTAC),
   - et un troisième agent correspondant à un (co)polymère ayant une densité de charge anionique supérieure à 0,1 meq/g, et introduit dans la suspension à raison de 100 g/t à 20000 g/t en poids de matière active (polymère) par rapport au poids sec de la suspension fibreuse, ledit troisième agent comprenant 1 à 100 mot % de :
      ○ au moins un monomère anionique possédant une fonction carboxylique choisi dans le groupe comprenant acide acrylique, acide methacrylique, acide maléique, acide itaconique et leurs sels...,
      ○ et/ou un monomère anionique possédant une fonction acide sulfonique choisi dans le groupe comprenant acide 2-acrylamido-2-méthylpropane sulfonique (AMPS), acide vinyl sulfonique, acide méthallyl sulfonique et leurs sels...,
      o et/ou au moins un monomère anionique possédant une fonction acide phosphonique,

Pour plus de clarté, dans la suite de la description, dans les exemples et dans les revendications, le (co)polymère ayant une densité de charge cationique supérieure à 1 meq/g et présentant des fonctions amine primaire, est désigné « premier agent » ou « polyvinylamine » bien qu'il puisse être introduit dans la suspension fibreuse après le troisième agent dénommé « troisième agent » et vice-versa. Idem pour le « second agent».

Le second agent est un (co)polymère organique synthétique résultant d'un procédé de polymérisation radicalaire.

Comme souligné précédemment, l'invention vise un procédé perfectionné qui consiste, au cours de l'élaboration même du papier, à incorporer à la suspension ou masse fibreuse ou pâte à papier, comme agents de résistance à sec, dans un ordre quelconque :
- de 0,01 à 2% en poids de matière active polymère par rapport au poids sec de la suspension fibreuse, d'au moins un (co)polymère ayant une densité de charge cationique supérieure à 1 meq/g et présentant des fonctions amine primaire,
- de 0,01 à 2% en poids de matière active polymère par rapport au poids sec de la suspension fibreuse, d'au moins un (co)polymère organique synthétique ayant une densité de charge cationique supérieure à 0,1 meq/g,
- et de 0,01 à 2% en poids de matière active polymère par rapport au poids sec de la suspension fibreuse, d'au moins un (co)polymère ayant une densité de charge anio nique supérieure à 0,1 meq/g.

De manière tout à fait surprenante, le procédé de l'invention permet d'atteindre un niveau de performances inégalé, à dosage similaire, dans l'application papetière pour la résistance à sec.

Le procédé de l'invention permet, en particulier, d'obtenir une résistance à l'éclatement et à la traction très élevée et ceci, sans effet secondaire négatif.

### A/ Le « premier agent » de résistance à sec : le (co)polymère ayant une densité de charge cationique supérieure à 1 meq/g et présentant des fonctions amine primaire

Il s'agit d'un polymère hydrosoluble ayant au moins 1 meq/g de fonction amine primaire.

1- Une voie des voies de préparation de ce polymère est la réaction la dégradation d'Hofmann sur un (co)polymère base, bien connue de l'homme de métier (FR 05.50135, JP 58-60094, JP 04-57992).
En pratique, le polymère base utilisé est constitué :
- d'au moins un monomère non ionique choisi dans le groupe comprenant l'acrylamide (et/ou le méthacrylamide), le N,N diméthylacrylamide et/ou l'acrylonitrile,
- et éventuellement :
   ■ d'au moins un monomère éthylénique cationique non saturé, choisi préférentiellement dans le groupe comprenant les monomères de type dialkylaminoalkyl (meth)acrylamide, diallylamine, methyldiallylamine et leurs sels d'ammonium quaternaire ou d'acides. On citera en particulier le chlorure de dimethyldiallylammonium (DADMAC), le chlorure d'acrylamidopropyltrimethylammonium (APTAC) et/ou le chlorure de methacrylamidopropyltrimethylammonium (MAPTAC),
   ■ et/ou d'au moins un autre monomère non ionique choisi préférentiellement dans le groupe comprenant le N-vinyl acetamide, N-vinyl formamide, la N-vinylpyrrolidone et/ou le vinyl acétate,
   ■ et/ou d'au moins un monomère anionique de type acide ou anhydride choisi par exemple dans le groupe comprenant, l'acide (méth)acrylique, l'acide acrylamidomethylpropane sulfonique, l'acide itaconique, l'anhydride maléique, l'acide maléique, l'acide méthallyl sulfonique, l'acide vinyl-sulfonique et leurs sels.

Il est important de noter que, en association avec ces monomères, il est également possible d'utiliser des monomères insolubles dans l'eau tels que les monomères acryliques, allyliques ou vinyliques comportant un groupement hydrophobe. Lors de leur utilisation, ces monomères seront employés dans des quantités très faibles, inférieures à 20 moles%, de préférence inférieures à 10 moles%, et ils seront choisis préférentiellement dans le groupe comprenant les dérivés de l'acrylamide comme les N-alkylacrylamide par exemple le N-tert-butylacrylamide, l'octylacrylamide ainsi que les N,N-dialkylacrylamides comme le N,N-dihexylacrylamide...les dérivés d'acide acrylique comme les alkyl acrylates et méthacrylates...

De manière connue, le polymère base peut également être ramifié. Comme on le sait, un polymère ramifié est un polymère qui présente sur la chaîne principale des branches, des groupements ou des ramifications, disposés globalement dans un plan.

On pourra effectuer la ramification de préférence durant (ou éventuellement après) la polymérisation, en présence d'un agent ramifiant et éventuellement d'un agent de transfert. On trouvera ci dessous une liste non limitative des ramifiants : methylene bisacrylamide (MBA), l'ethylene glycol di-acrylate, le polyethylene glycol dimethacrylate, le diacrylamide, le cyanomethylacrylate, le vinyloxyethylacrylate ou methacrylate, la triallylamine, le formaldehyde, le glyoxal, les composés de type glycidyléther comme l'éthylèneglycol diglycidyléther, ou des époxy ou tout autre moyen bien connu de l'homme de métier permettant la réticulation.

En pratique, l'agent de ramification est le méthylène bis acrylamide (MBA) introduit à raison de cinq à cinq mille (5 à 5000) parties par million en poids, de préférence 5 à 2000.

On trouvera ci dessous une liste non limitative des agents de transfert : alcool isopropylique, hypophosphite de sodium, mercaptoethanol, etc...

L'homme de métier saura choisir la meilleure combinaison en fonction de ses connaissances propres et de la présente description, ainsi que des exemples qui vont suivre.

Le (co)polymère servant de base à la réaction de dégradation d'Hofmann ne nécessite pas le développement de procédé de polymérisation particulier. Les principales techniques de polymérisation, bien connues par l'homme de métier et pouvant être utilisées sont : la polymérisation par précipitation, la polymérisation en émulsion (aqueuse ou inverse) suivie ou non d'une étape de distillation et/ou de spray drying, et la polymérisation en suspension ou la polymérisation en solution, ces deux techniques étant préférées.

Cette base est caractérisée en ce qu'elle a un poids moléculaire supérieur à 5000 et sans limitation maximum.

La dégradation d'Hofmann est alors réalisée en versant sur la base (ayant préférentiellement une concentration en solution aqueuse supérieure à 10% en poids) une solution alcaline d'hypohalogénure d'alcalino-terreux et d'hydroxide d'alcalinoterreux, par étape ou en continu, tout en absorbant les calories produites par la réaction puis en versant le tout dans de l'acide pour que la décarboxylation ait lieu.

Une fois terminée, le produit de dégradation d'Hofmann est à une concentration supérieure à 3,5% et généralement supérieure à 4,5%.

En fonction de la quantité introduite de la solution alcaline d'hypohalogénure d'alcalino-terreux et d'hydroxide d'alcalino-terreux, il est possible de générer des variations de cationicité, liée à la quantité de fonctions amines produite sur le squelette carboné du polymère.

Par ailleurs, il est possible d'atteindre une concentration du produit de dégradation d'Hofmann en solution de l'ordre de 10%, voire de 15% et plus, en utilisant des procédés de concentration tels que l'ultrafiltration, la diafiltration et ce, sans effet négatif sur le produit.

2- Une autre voie de préparation du « premier agent » de résistance à sec, également bien connue de l'homme de métier, consiste en une hydrolyse acide ou basique d'un (co)polymère base de polyvinylformamide, et ses dérivés.

En pratique, le polymère base utilisé est constitué :
- d'au moins un monomère non ionique choisi dans le groupe comprenant la N-vinylformamide, N-vinylacétamide, N-vinylpyrrolidone, et autres groupes tels que N-vinylacétate.
- et éventuellement :
   ■ d'au moins un monomère éthylénique cationique non saturé, choisi préférentiellement dans le groupe comprenant les monomères de type dialkylaminoalkyl (meth)acrylamide, diallylamine, methyldiallylamine et leurs sels d'ammonium quaternaire ou d'acides. On citera en particulier le chlorure de dimethyldiallylammonium (DADMAC), le chlorure d'acrylamidopropyltrimethylammonium (APTAC) et/ou le chlorure de methacrylamidopropyltrimethylammonium (MAPTAC),
   ■ et/ou d'au moins un monomère non ionique choisi dans le groupe comprenant l'acrylamide (et/ou le méthacrylamide), le N,N diméthylacrylamide et/ou l'acrylonitrile,
   ■ et/ou d'au moins un monomère anionique de type acide ou anhydride choisi par exemple dans le groupe comprenant, l'acide (méth)acrylique, l'acide acrylamidomethylpropane sulfonique, l'acide itaconique, l'anhydride maléique, l'acide maléique, l'acide méthallyl sulfonique, l'acide vinyl-sulfonique et leurs sels.

Il est important de noter que, en association avec ces monomères, il est également possible d'utiliser des monomères insolubles dans l'eau tels que les monomères acryliques, allyliques ou vinyliques comportant un groupement hydrophobe. Lors de leur utilisation, ces monomères seront employés dans des quantités très faibles, inférieures à 20 moles%, de préférence inférieures à 10 moles%, et ils seront choisis préférentiellement dans le groupe comprenant les dérivés de l'acrylamide comme les N-alkylacrylamide par exemple le N-tert-butylacrylamide, l'octylacrylamide ainsi que les N,N-dialkylacrylamides comme le N,N-dihexylacrylamide...les dérivés d'acide acrylique comme les alkyl acrylates et méthacrylates...

De manière connue, le polymère base peut également être ramifié. Comme on le sait, un polymère ramifié est un polymère qui présente sur la chaîne principale des branches, des groupements ou des ramifications, disposés globalement dans un plan.

On pourra effectuer la ramification de préférence durant (ou éventuellement après) la polymérisation, en présence d'un agent ramifiant et éventuellement d'un agent de transfert. On trouvera ci dessous une liste non limitative des ramifiants : methylene bisacrylamide (MBA), l'ethylene glycol di-acrylate, le polyethylene glycol dimethacrylate, le diacrylamide, le cyanomethylacrylate, le vinyloxyethylacrylate ou methacrylate, la triallylamine, le formaldehyde, le glyoxal, les composés de type glycidyléther comme l'éthylèneglycol diglycidyléther, ou des époxy ou tout autre moyen bien connu de l'homme de métier permettant la réticulation.

En pratique, lorsque l'agent de ramification est le méthylène bis acrylamide (MBA), il est introduit à raison de cinq à cinq milles (5 à 5000) parties par million en poids, de préférence 5 à 2000.

On trouvera ci dessous une liste non limitative des agents de transfert : alcool isopropylique, hypophosphite de sodium, mercaptoethanol, etc...

Le (co)polymère base ne nécessite pas le développement de procédé de polymérisation particulier. Les principales techniques de polymérisation, bien connues par l'homme de métier et pouvant être utilisées sont : la polymérisation par précipitation, la polymérisation en émulsion (aqueuse ou inverse) suivie ou non d'une étape de distillation et/ou de spray drying, et la polymérisation en suspension ou la polymérisation en solution, ces deux techniques étant préférées.

Cette base est caractérisée en ce qu'elle a un poids moléculaire supérieur à 5000 et sans limitation maximum.

En fonction de la quantité d'acide ou de soude introduite lors de l'hydrolyse, il est possible de générer différentes cationicités, liées à la quantité de fonctions amines produite sur le squelette carboné du polymère.

En pratique, le « premier agent » de résistance à sec est introduit comme première, deuxième ou troisième composante du système, préférentiellement avant le troisième agent, en un ou plusieurs points d'injection, dans la suspension à raison de 100 g/t à 20000 g/t en poids de matière active (polymère) par rapport au poids sec de la suspension fibreuse, de préférence 500 g/t à 5000 g/t. Egalement, le « premier agent » de résistance à sec peut être introduit en mélange avec le « second agent » (le (co)polymère organique ayant une densité de charge cationique supérieure à 0,1 meq/g) en un ou plusieurs points d'injection.

L'injection ou l'introduction du (co)polymère ayant une densité de charge cationique supérieure à 1 meq/g et présentant des fonctions amine primaire selon l'invention est possible en pâte épaisse, comme en pâte diluée, c'est-à-dire dans les cuviers de pâte épaisse après raffineurs jusqu'au circuit des eaux blanches.

### B/ Le « second agent » de résistance à sec : le (co)polymère organique synthétique ayant une densité de charge cationique supérieure à 0,1 meq/g.

En pratique, le « second agent » est un polymère organique synthétique hydrosoluble purement cationique ou bien amphotère, ayant une densité de charge cationique supérieure à 0,1 meq/g et un poids moléculaire d'au moins 5000, obtenu à partir de :
- 1 à 100% molaire d'au moins un monomère possédant une charge cationique,
- et 0 à 99% molaire d'au moins un monomère possédant une charge neutre et/ou anionique.

Le « second agent » peut notamment être glyoxalé ou non.

On trouvera ci-dessous une liste non limitative des monomères pouvant être utilisés :
a/ parmi les monomères cationiques, ceux choisis dans le groupe comprenant l'acrylate de dimethylaminoethyl (ADAME) et/ou le methacrylate de dimethylaminoethyle (MADAME) quaternisés ou salifiés, le chlorure de dimethyldiallylammonium (DADMAC), le chlorure d'acrylamido propyltrimethyl ammonium (APTAC) et/ou le chlorure de methacrylamido propyltrimethyl ammonium (MAPTAC).
b/ parmi les monomères neutres, les monomères non ioniques choisis dans le groupe comprenant acrylamide, methacrylamide, N,N diméthylacrylamide, N-vinyl pyrrolidone, N-vinyl acétamide, N-vinyl formamide, vinylacetate, esters acrylate, alcool allylique...
c/ parmi les monomères anioniques : on citera, en particulier et de façon non limitative, les monomères anioniques possédant une fonction carboxylique choisis dans le groupe comprenant : acide acrylique, acide methacrylique, acide maléique, acide itaconique et leurs sels...), possédant une fonction acide sulfonique (choisis dans le groupe comprenant : acide 2-acrylamido-2-méthylpropane sulfonique (AMPS), acide vinyl sulfonique, acide méthallyl sulfonique et leurs sels...), possédant une fonction acide phosphonique.

En association avec ces monomères, il est également possible d'utiliser des monomères insolubles dans l'eau tels que les monomères acryliques, allyliques ou vinyliques comportant un groupement hydrophobe. Lors de leur utilisation, ces monomères seront employés dans des quantités très faibles, inférieures à 20 moles%, de préférence inférieures à 10 moles%, et ils seront choisis préférentiellement dans le groupe comprenant les dérivés de l'acrylamide comme les N-alkylacrylamide par exemple le N-tert-butylacrylamide, l'octylacrylamide ainsi que les N,N-dialkylacrylamides comme le N,N-dihexylacrylamide...les dérivés d'acide acrylique comme les alkyl acrylates et méthacrylates...

Le « second agent » ne nécessite pas le développement de procédé de polymérisation particulier. Il peut être obtenu par toutes les techniques de polymérisation bien connues de l'homme de métier : polymérisation en gel, polymérisation par précipitation, polymérisation en émulsion (aqueuse ou inverse) suivie ou non d'une étape de distillation et/ou de spray drying, polymérisation en suspension, polymérisation en solution...

Selon un mode de réalisation particulier et préféré, le « second agent » est un (co)polymère synthétique ayant une densité de charge cationique supérieure à 0,1 meq/g et est ramifié. Il est obtenu par l'ajout, avant, pendant et/ou après la polymérisation, d'un agent ramifiant en présence ou non d'un agent de transfert. En pratique, lorsque l'agent de ramification est le méthylène bis acrylamide (MBA), il est introduit à raison de cinq à cinq mille (5 à 5000) parties par million en poids, de préférence 5 à 2000.

On trouvera ci dessous une liste non limitative des agents ramifiants : methylene bisacrylamide (MBA), l'ethylene glycol di-acrylate, le polyethylene glycol dimethacrylate, le diacrylamide, le cyanomethylacrylate, le vinyloxyethylacrylate ou methacrylate, la triallylamine, le formaldehyde, le glyoxal, les composés de type glycidyléther comme l'éthylèneglycol diglycidyléther, ou des époxy ou tout autre moyen bien connu de l'homme de métier permettant la ramification.

Lorsque l'agent ramifiant est du glyoxal, il est ajouté après la polymérisation dans une proportion d'au moins 0,5 % par rapport au (co)polymère à glyoxaler.

Dans un mode de réalisation particulier, le (co)polymère ayant une densité de charge cationique supérieure à 0,1 meq/g est non glyoxalé.

On trouvera ci dessous une liste non limitative des agents de transfert : alcool isopropylique, hypophosphite de sodium, mercaptoethanol, etc...

En pratique, le « second agent » est introduit comme première, deuxième ou troisième composante du système, en un ou plusieurs points d'injection, dans la suspension à raison de 100 g/t à 20000 g/t en poids de matière active (polymère) par rapport au poids sec de la suspension fibreuse, de préférence de 500 g/t à 5000 g/t. De même, le « second agent » peut être introduit en mélange avec le « premier agent » en un ou plusieurs points d'injection.

### C/ Le « troisième agent » de résistance à sec : le (co)polymère ayant une densité de charge anionique supérieure à 0,1 meq/g.

En pratique, le « troisième agent » est un polymère organique hydrosoluble purement anionique ou bien amphotère ayant une densité de charge anionique supérieure à 0,1 meq/g et un poids moléculaire d'au moins 5000 obtenu à partir de :
- 1 à 100% molaire d'au moins un monomère possédant une charge anionique,
- et 0 à 99% molaire d'au moins un monomère possédant une charge neutre et/ou cationique.

Le « troisième agent » peut notamment être glyoxalé ou non.

On trouvera ci-dessous une liste non limitative des monomères pouvant être utilisés :
a/ parmi les monomères anioniques, les monomères anioniques possédant une fonction carboxylique choisis dans le groupe comprenant acide acrylique, acide methacrylique, acide maléique, acide itaconique et leurs sels..., ceux possédant une fonction acide sulfonique choisis dans le groupe comprenant acide 2-acrylamido-2-méthylpropane sulfonique (AMPS), acide vinyl sulfonique, acide méthallyl sulfonique et leurs sels..., ceux possédant une fonction acide phosphonique.
b/ parmi les monomères possédant une charge neutre, les monomères non ioniques choisis dans le groupe comprenant acrylamide, methacrylamide, N,N diméthylacrylamide, N-vinyl pyrrolidone, N-vinyl acétamide, N-vinyl formamide, vinylacetate, esters acrylate, alcool allylique...
c/ parmi les monomères cationiques, les monomères cationiques choisis dans le groupe comprenant l'acrylate de dimethylaminoethyl (ADAME) et/ou le methacrylate de dimethylaminoethyle (MADAME) quaternisés ou salifiés, le chlorure de dimethyldiallylammonium (DADMAC), le chlorure d'acrylamido propyltrimethyl ammonium (APTAC) et/ou le chlorure de methacrylamido propyltrimethyl ammonium (MAPTAC).

En association avec ces monomères, il est également possible d'utiliser des monomères insolubles dans l'eau tels que les monomères acryliques, allyliques ou vinyliques comportant un groupement hydrophobe. Lors de leur utilisation, ces monomères seront employés dans des quantités très faibles, inférieures à 20 moles%, de préférence inférieures à 10 moles%, et ils seront choisis préférentiellement dans le groupe comprenant les dérivés de l'acrylamide comme les N-alkylacrylamide par exemple le N-tert-butylacrylamide, l'octylacrylamide ainsi que les N,N-dialkylacrylamides comme le N,N-dihexylacrylamide...les dérivés d'acide acrylique comme les alkyl acrylates et méthacrylates...

Le « troisième agent » ne nécessite pas le développement de procédé de polymérisation particulier. Elle peut être obtenue par toutes les techniques de polymérisation bien connues de l'homme de métier : polymérisation en gel, polymérisation par précipitation, polymérisation en émulsion (aqueuse ou inverse) suivie ou non d'une étape de distillation et/ou de spray drying, polymérisation en suspension, polymérisation en solution...

Selon un mode de réalisation particulier et préféré, le « troisième agent » de résistance à sec est un (co)polymère ayant une densité de charge anionique supérieure à 0,1 meq/g et est ramifié. Il est obtenu par l'ajout, avant, pendant et/ou après la polymérisation, d'un agent ramifiant en présence ou non d'un agent de transfert. En pratique, lorsque l'agent de ramification est le méthylène bis acrylamide (MBA) introduit à raison de cinq à cinq mille (5 à 5000) parties par million en poids, de préférence 5 à 2000.

Lorsque l'agent ramifiant est du glyoxal, il est ajouté après la polymérisation dans une proportion d'au moins 0,5 % par rapport au (co)polymère à glyoxaler.

On trouvera ci dessous une liste non limitative des agents ramifiants : methylene bisacrylamide (MBA), l'ethylene glycol di-acrylate, le polyethylene glycol dimethacrylate, le diacrylamide, le cyanomethylacrylate, le vinyloxyethylacrylate ou methacrylate, la triallylamine, le formaldehyde, le glyoxal, les composés de type glycidyléther comme l'éthylèneglycol diglycidyléther, ou des époxy ou tout autre moyen bien connu de l'homme de métier permettant la ramification.
On trouvera ci dessous une liste non limitative des agents de transfert : alcool isopropylique, hypophosphite de sodium, mercaptoethanol, etc...

En pratique, le « troisième agent » est introduit comme première, deuxième ou troisième composante du système, préférentiellement après le « premier agent » de résistance à sec, en un ou plusieurs points d'injection, dans la suspension à raison de 100 g/t à 20000 g/t en poids de matière active (polymère) par rapport au poids sec de la suspension fibreuse, de préférence de 500 g/t à 5000 g/t.

Pour des raisons de commercialisation, on recherchera à proposer les agents de résistance à sec de l'invention sous leur forme la plus concentrée possible, en utilisant les techniques de concentration adaptées bien connues de l'homme de métier.

L'invention a enfin pour objet une feuille de papier ou de carton susceptible d'être obtenue par le procédé précédemment décrit. Cette feuille se distingue des feuilles de l'art antérieur de par ses caractéristiques exceptionnelles de résistance à sec.

Les exemples suivants illustrent l'invention sans toutefois en limiter la portée.

### EXEMPLES

### Présentation des agents de résistance à sec

### a/ Le « premier agents » de résistance à sec: la polyvinylamine

Les polymères P1 et P2 ont été réalisés.

P1 : Le polymère a été obtenu par une réaction de dégradation d'Hofmann sur un homopolymère d'acrylamide polymérisé en solution aqueuse à 25% de concentration et ayant une viscosité de 8500 cps (poids moléculaire d'environ 200 000). La dégradation d'Hofmann est réalisée à la température de 10°C avec de l'hypochlorite de sodium, de l'hydroxyde de sodium et de l'acide chlorhydrique.
Le produit a une concentration finale de 7% et une charge cationique de 6,2 meq/g.

P2 : Le polymère a été obtenu par hydrolyse basique d'un homopolymère de vinylformamide polymérisé en solution aqueuse à 25% de concentration et ayant une viscosité de 36000 cps (poids moléculaire d'environ 300 000).
L'hydrolyse est réalisée avec de la soude à 80°C pendant 5h.
Le produit a une concentration finale de 14,5% et une charge cationique de 6,2 meq/g.

### b/ Le « second agent » de résistance à sec : la résine cationique

### 2 types de polymères sont exemplifiés :

C1 : Il s'agit d'un copolymère acrylamide / adame chlorométhylé (65/35 mol%) ramifié au MBA, polymérisé en solution aqueuse à 15% de concentration et ayant une viscosité de 3000 cps.

C2 : Il s'agit d'un copolymère acrylamide / DADMAC (95/5 mol%) glyoxalé. La base (avant glyoxalation) est polymérisée en solution aqueuse à 40% de concentration et présente une viscosité de 3000 cps. Le produit après glyoxalation (30 poids% de glyoxal) a une viscosité de 20 cps et une concentration de 7,5%.

### c/ Le « troisième agent » de résistance à sec : la résine anionique

Les résines anioniques testées sont des copolymères d'acrylamide et de sels d'acide acrylique obtenues par polymérisation en solution à 15%. Certains polymères présentent une structure linéaire et d'autres ramifiée. De plus, nous avons également réalisé un polymère linéaire amphotère de charge globale anionique (A3).

Dans les exemples qui suivent, on utilise les polymères suivants :

| **résine anionique** | **Composition** | **Rapport molaire** | **Anionicité (meq/g)** | **Structure** | **Viscosité de la solution de polymère (cps)** |
|---|---|---|---|---|---|
| A1 | AM/AA | 70/30 | 3,85 | Linéaire | 2500 |
| A2 | AM/AA | 70/30 | 3,85 | Ramifié (MBA) | 2500 |
| A3 | AM/AA/ ADAME MeCl | 83/10/7 | 0,48 | Linéaire | 9000 |
| A4 | AM/AA | 55/28/17 (glyoxal) | 3,75 | Ramifié (glyoxal) | 2500 |

| | | | | | |
|---|---|---|---|---|---|
| AA = Acrylate de sodium AM = Acrylamide ADAME MeCl = Acrylate de dimethylaminoethyl chlorométhylé | | | | | |

### Procédure de test des propriétés de résistance à sec

Les formettes de papier sont réalisées avec une formette dynamique automatique. Tout d'abord, la pâte à papier est préparée en désintégrant pendant 30 minutes 90 grammes de fibres kraft vierges dans 2 litres d'eau chaude. La pâte obtenue est ensuite diluée jusqu'à un volume total de 9 litres. Une fois la consistance mesurée précisément, la quantité nécessaire de cette pâte est prélevée de manière à obtenir au final une feuille avec un grammage de 60g/m².

La pâte est alors introduite dans le cuvier de la formette dynamique, diluée jusqu'à une consistance de 0,32% et agitée modérément avec un agitateur mécanique afin d'homogénéiser la suspension fibreuse.

En mode manuel, la pâte est pompée jusqu'au niveau de la buse afin d'amorcer le circuit.

Un buvard et la toile de formation sont placés dans le bol de la formette dynamique avant de démarrer la rotation du bol à 900m/min et de construire le mur d'eau. Les différents agents de résistance à sec sont alors introduits dans la suspension fibreuse agitée avec un temps de contact de 30 secondes pour chaque polymère. La feuille est alors réalisée (en mode automatique) par 22 aller-retour de la buse projetant la pâte dans le mur d'eau. Une fois que l'eau est drainée et que la séquence automatique est terminée, la toile de formation avec le réseau de fibres formé est retirée du bol de la formette dynamique et placée sur une table. Un buvard sec est déposé du côté du matelas de fibres humides et est pressé une fois avec un rouleau. L'ensemble est retourné et la toile est délicatement séparée du matelas fibreux. Un second buvard sec est déposé et la feuille (entre les deux buvards) est pressée une fois sous une presse délivrant 4 bars puis est séchée sur un sécheur tendu pendant 9 min à 107°C. Les deux buvards sont ensuite retirés et la feuille est stockée pendant une nuit dans une pièce à humidité et température contrôlées (50% d'humidité relative et 23 °C). Les propriétés de résistance à sec et humide de toutes les feuilles obtenues par cette procédure sont alors évaluées.

L'éclatement est mesuré avec un éclatomètre Messmer Buchel M 405 (moyenne sur 14 mesures).

La traction à sec et/ou l'énergie de traction absorbée (TEA) sont mesurées dans le sens machine avec un appareil de traction Testometric AX (moyenne sur 5 échantillons).

La traction humide est mesurée dans le sens machine avec un appareil de traction Testometric AX après que l'échantillon ait été trempé pendant 20 secondes dans une cellule de Finch remplie d'eau déionisée (moyenne sur 5 échantillons).

Dans tous les exemples qui suivent, et sauf indication contraire, les feuilles de papier sont réalisées selon la procédure ci-dessus en introduisant en suivant l'ordre d'introduction présentée dans les tableaux.

Les tests sont réalisés avec une pâte à pH neutre. Les essais annotés (inv) correspondent à ceux de l'invention.

**Tab.1 : Effet lié à l'ajout du «premier agent» de résistance à sec : la polyvinylamine**

| Numéro de feuilles | 1^{er} produit | 2^{ème} produit | 3^{ème} produit | Indice d'éclate ment | Traction à sec (km) | TEA à sec (j/m²) | Traction humide (m) |
|---|---|---|---|---|---|---|---|
| Témoin | - | - | - | 1.436 | 3.760 | 40.24 | 40 |
| 1 | C1 | A2 | - | 1.975 | 4.437 | 53.51 | 146 |
| 2 (inv) | C1 | P1 | A2 | 2.130 | 4.646 | 60.01 | 215 |
| 3 (inv) | C1 / P1 (en mélange) | | A2 | 2.003 | 4.530 | 61.86 | 225 |
| 4 | C2 | A2 | - | 1.875 | 3.973 | 49.61 | 286 |
| 5 (inv) | C2 | P1 | A2 | 2.330 | 4.620 | 66.63 | 591 |
| 6 (inv) | C2 | P2 | A2 | 2.361 | 4.591 | 68.16 | 493 |

| | | | | | | | |
|---|---|---|---|---|---|---|---|
| *Dosages des feuilles 1 et 4 : 1^{er} produit = 0.55% ; 2^{ème} produit = 0.30%* *Dosages des feuilles 2, 3, 5, 6 : 1^{er} produit = 0.30% 2^{ème} produit = 0.25% ; 3^{ème} produit = 0.30%* | | | | | | | |

Le tableau ci-dessus démontre l'effet surprenant résultant de l'utilisation d'une polyvinylamine (« premier agent » de résistance à sec) en association avec un système classique de type bi-composantes. On constate, de plus, qu'une polyvinylamine issue d'une dégradation d'Hofmann ou bien d'une hydrolyse de polyvinylformamide permettent d'atteindre un niveau de résistance à sec identique.

Remarque : on notera que le polymère C2 à un effet négatif important sur la résistance humide, entraînant des difficultés de process telles que lors de la trituration en pâte de la feuille en vue d'un recyclage des cassés sec.

**Tab.2 : Synergie apportée par le système tri-composantes**

| Numéro de feuilles | 1^{er} produit | 2^{ème} produit | 3^{ème} produit | Indice d'éclatement | Traction à sec (km) | TEA à sec ₍j/m²) |
|---|---|---|---|---|---|---|
| Témoin | - | - | - | 1.436 | 3.760 | 40.24 |
| 7 | C2 | - | - | 1.800 | 3.901 | 42.05 |
| 8 | P1 | - | - | 1.470 | 3.822 | 41.36 |
| 9 | C2 | P1 | - | 1.996 | 3.950 | 53.03 |
| 4 | C2 | A2 | - | 1.875 | 3.973 | 49.61 |
| 1 | C1 | A2 | - | 1.975 | 4.437 | 53.51 |
| 5 (inv) | C2 | P1 | A2 | 2.330 | 4.620 | 66.63 |
| 2 (inv) | C1 | P1 | A2 | 2.130 | 4.646 | 60.01 |

| | | | | | | |
|---|---|---|---|---|---|---|
| *Dosages des feuilles 7 et 8 : 1^{er} produit = 0.55%* *Dosages des feuilles 9, 4 et 1 : 1^{er} produit = 0.55% ; 2^{ème} produit = 0.30%* *Dosages des feuilles 5 et 2 : 1^{er} produit = 0.30%: 2^{ème} produit = 0.25%* ; *3^{ème} produit = 0.30%* | | | | | | |

Ces résultats montrent clairement que seule la synergie des 3 agents de résistance à sec de l'invention permet d'atteindre des niveaux de performance inégalés qui ne peuvent pas être obtenus par les systèmes classiques à 1 ou 2 composantes.

**Tab.3 : Effet du dosage**

| Numéro de feuilles | 1^{er} produit | 2^{ème} produit | 3^{ème} produit | Indice d'éclatement | Traction à sec (km) | TEA à sec (j/m²) |
|---|---|---|---|---|---|---|
| Témoin | | | | 1.436 | 3.760 | 40.24 |
| 2 (inv) | 0.3 | 0.25 | 0.3 | 2.130 | 4.646 | 60.01 |
| 10 (inv) | 0.3 | 0.17 | 0.2 | 2.025 | 4.486 | 58.74 |
| 11 (inv) | 0.3 | 0.1 | 0.15 | 1.997 | 4.466 | 56.84 |
| 5 (inv) | 0.3 | 0.25 | 0.3 | 2.330 | 4.620 | 66.63 |
| 12 (inv) | 0.3 | 0.17 | 0.2 | 2.316 | 4.585 | 63.45 |
| 13 (inv) | 0.3 | 0.1 | 0.15 | 2.327 | 4.528 | 62.35 |
| 14 | 0.25 | 0.3 | - | 1.908 | 4.403 | 55.43 |

| | | | | | | |
|---|---|---|---|---|---|---|
| *Feuille 2, 10 et 11 : 1^{er} produit = C1 ; 22^{ème} produit = P1 ; 3^{ème} produit = A2* *Feuille 5, 12 et 13 : 1^{er} produit = C2 ; 2^{ème} produit = P1 ; 3^{ème} produit = A2* *Feuille 14 : 1^{er} produit = P1 : 2^{ème} produit = A2 (systèmes bi-composantes)* | | | | | | |

Le tableau précédent montre que la synergie entre les 3 produits s'opère même à des dosages faibles.

Les feuilles 5 et 13 montrent que la diminution du dosage total de 0.85% à 0.55% n'entraîne pas de baisse importante des performances.

De même, les feuilles 13 et 14 montrent qu'à dosage total identique, la combinaison des 3 agents de l'invention permet d'atteindre des niveaux de résistance à sec nettement plus élevés que la combinaison polyvinylamine + polymère anionique qui est pourtant déjà très performante (cf. FR 05.50135).

**Tab.4 : Effet du type de polymère anionique utilisé comme résine anionique**

| Numéro de feuilles | 1^{er} produit | 2^{ème} produit | 3^{ème} produit | Indice d'éclatement | Traction à sec (km) | TEA à sec (j/m²) |
|---|---|---|---|---|---|---|
| Témoin | - | - | - | 1.436 | 3.760 | 40.24 |
| 15 (inv) | C2 | P1 | A1 | 2.247 | 4.592 | 65.87 |
| 5 (inv) | C2 | P1 | A2 | 2.330 | 4.620 | 66.63 |
| 16 (inv) | C2 | P1 | A3 | 2.203 | 4.498 | 63.12 |
| 17 (inv) | C2 | P1 | A4 | 2.191 | 4.486 | 63.09 |

Il apparaît clairement que la résistance à sec est augmentée en utilisant comme résine anionique un polymère ramifié (A2) plutôt que linéaire (A1). Il faut également noter qu'un polymère amphotère (A3) ou un polymère anionique glyoxalé (A4) permettent d'atteindre un même niveau de performance très satisfaisant.

## Revendications

1. Procédé de fabrication d'une feuille de papier et/ou de carton et analogues, selon lequel, avant formation de ladite feuille, on ajoute à la suspension fibreuse, séparément ou en mélange, dans un ordre quelconque d'introduction, en un ou plusieurs points d'injection, au moins trois agents de résistance à sec respectivement :
- un premier agent correspondant à un (co)polymère ayant une densité de charge cationique supérieure à 1 meq/g, et introduit dans la suspension à raison de 100 g/t à 20000 g/t en poids de matière active (polymère) par rapport au poids sec de la suspension fibreuse,
- un second agent correspondant à un (co)polymère organique synthétique ayant une densité de charge cationique supérieure à 0,1 meq/g, et introduit dans la suspension à raison de 100 g/t à 20000 g/t en poids de matière active (polymère) par rapport au poids sec de la suspension fibreuse, ledit second agent comprenant 1 à 100 mol % d'au moins un monomère possédant une charge cationique choisi dans le groupe comprenant l'acrylate de dimethylaminoethyl (ADAME) et/ou le methacrylate de dimethylaminoethyle (MADAME) quaternisés ou salifiés, le chlorure de dimethyldiallylammonium (DADMAC), le chlorure d'acrylamido propyltrimethyl ammonium (APTAC) et/ou le chlorure de methacrylamido propyltrimethyl ammonium (MAPTAC),
- et un troisième agent correspondant à un (co)polymère ayant une densité de charge anionique supérieure à 0,1 meq/g, et introduit dans la suspension à raison de 100 g/t à 20000 g/t en poids de matière active (polymère) par rapport au poids sec de la suspension fibreuse, ledit troisième agent comprenant 1 à 100 mol % de :
○ au moins un monomère anionique possédant une fonction carboxylique choisi dans le groupe comprenant acide acrylique, acide methacrylique, acide maléique, acide itaconique et leurs sels...,
○ et/ou un monomère anionique possédant une fonction acide sulfonique choisi dans le groupe comprenant acide 2-acrylamido-2-méthylpropane sulfonique (AMPS), acide vinyl sulfonique, acide méthallyl sulfonique et leurs sels...,
○ et/ou au moins un monomère anionique possédant une fonction acide phosphonique,
**caractérisé en ce que** le premier agent présente des fonctions amine primaire et soit correspond à un produit de dégradation d'Hofmann sur un (co)polymère base constitué :
- d'au moins un monomère non ionique choisi dans le groupe comprenant l'acrylamide et/ou le méthacrylamide, le N,N diméthylacrylamide et/ou l'acrylonitrile,
- et éventuellement :
■ d'au moins un monomère éthylénique cationique non saturé, choisi dans le groupe comprenant les monomères de type dialkylaminoalkyl (meth)acrylamide, diallylamine, methyldiallylamine et leurs sels d'ammonium quaternaire ou d'acides,
■ et/ou d'au moins un monomère non ionique choisi dans le groupe comprenant le N-vinyl acetamide, N-vinyl formamide, la N-vinylpyrrolidone et/ou le vinyl acétate,
■ et/ou d'au moins un monomère anionique de type acide ou anhydride choisi par exemple dans le groupe comprenant, l'acide (méth)acrylique, l'acide acrylamidomethylpropane sulfonique, l'acide itaconique, l'anhydride maléique, l'acide maléique, l'acide méthallyl sulfonique, l'acide vinyl-sulfonique et leurs sels,
soit est obtenu par hydrolyse acide ou basique d'un (co)polymère base constitué :
- d'au moins un monomère non ionique choisi dans le groupe comprenant la N-vinylformamide, N-vinylacétamide, N-vinylpyrrolidone, et N-vinylacétate.
- et éventuellement :
■ d'au moins un monomère éthylénique cationique non saturé, choisi dans le groupe comprenant les monomères de type dialkylaminoalkyl (meth)acrylamide, diallylamine, methyldiallylamine et leurs sels d'ammonium quaternaire ou d'acides,
■ et/ou d'au moins un monomère non ionique choisi dans le groupe comprenant l'acrylamide (et/ou le méthacrylamide), le N,N diméthylacrylamide et/ou l'acrylonitrile,
■ et/ou d'au moins un monomère anionique de type acide ou anhydride choisi par exemple dans le groupe comprenant, l'acide (méth)acrylique, l'acide acrylamidomethylpropane sulfonique, l'acide itaconique, l'anhydride maléique, l'acide maléique, l'acide méthallyl sulfonique, l'acide vinyl-sulfonique et leurs sels.

2. Procédé selon la revendication 1, **caractérisé en ce que** le produit de dégradation d'Hofmann est à une concentration supérieure à 3,5% et avantageusement supérieure à 4,5%.

3. Procédé selon l'une des revendications 1 ou 2 **caractérisé en ce que** le (co)polymère base est ramifié.

4. Procédé selon l'une des revendications précédentes, **caractérisé en ce que** le premier agent de résistance à sec est introduit dans la suspension à raison de 500 g/t à 5000 g/t en poids de matière active (polymère) par rapport au poids sec de la suspension fibreuse.

5. Procédé selon la revendication 1, **caractérisé en ce que** le second agent comprend de 0 à 99% molaire d'au moins un monomère possédant une charge neutre et/ou anionique.

6. Procédé selon la revendication 5, **caractérisé en ce que** le second agent est ramifié en présence d'un agent ramifiant.

7. Procédé selon la revendication 6, **caractérisé en ce que** l'agent ramifiant est le glyoxal.

8. Procédé selon la revendication 5, **caractérisé en ce que** le second agent n'est pas glyoxalé.

9. Procédé selon la revendication 5, **caractérisé en ce que**
- les monomères possédant une charge neutre sont des monomères non ioniques choisis dans le groupe comprenant acrylamide, methacrylamide, N,N diméthylacrylamide, N-vinyl pyrrolidone, N-vinyl acétamide, N-vinyl formamide, vinylacetate, esters acrylate, alcool allylique...
- les monomères anioniques sont ceux possédant une fonction carboxylique choisis dans le groupe comprenant acide acrylique, acide methacrylique, acide maléique, acide itaconique et leurs sels...), ceux possédant une fonction acide sulfonique choisis dans le groupe comprenant acide 2-acrylamido-2-méthylpropane sulfonique (AMPS), acide vinyl sulfonique, acide méthallyl sulfonique et leurs sels...), ceux possédant une fonction acide phosphonique.

10. Procédé selon l'une des revendications précédentes, **caractérisé en ce que** le second agent de résistance à sec est introduit dans la suspension à raison de 500 g/t à 5000 g/t en poids de matière active (polymère) par rapport au poids sec de la suspension fibreuse.

11. Procédé selon la revendication 1, **caractérisé en ce que** le troisième agent comprend de 0 à 99% molaire d'au moins un monomère possédant une charge neutre et/ou cationique.

12. Procédé selon la revendication 11, **caractérisé en ce que** le troisième agent est ramifié en présence d'un agent ramifiant.

13. Procédé selon la revendication 12, **caractérisé en ce que** l'agent ramifiant est le glyoxal.

14. Procédé selon la revendication 11, **caractérisé en ce que** :
- les monomères possédant une charge neutre sont les monomères non ioniques choisis dans le groupe comprenant acrylamide, methacrylamide, N,N diméthylacrylamide, N-vinyl pyrrolidone, N-vinyl acétamide, N-vinyl formamide, vinylacetate, esters acrylate, alcool allylique...
- les monomères cationiques sont choisis dans le groupe comprenant l'acrylate de dimethylaminoethyl (ADAME) et/ou le methacrylate de dimethylaminoethyle (MADAME) quaternisés ou salifiés, le chlorure de dimethyldiallylammonium (DADMAC), le chlorure d'acrylamido propyltrimethyl ammonium (APTAC) et/ou le chlorure de methacrylamido propyltrimethyl ammonium (MAPTAC).

15. Procédé selon l'une des revendications précédentes, **caractérisé en ce que** le troisième agent est introduit dans la suspension à raison de 500 g/t à 5000 g/t en poids de matière active (polymère) par rapport au poids sec de la suspension fibreuse.

16. Procédé selon la revendication 1, **caractérisé en ce que** les premier, second et troisième agents sont introduits dans la suspension fibreuse à raison de 0,01 à 2% en poids de matière active polymère par rapport au poids sec de la suspension fibreuse.

## Claims

1. Process for the manufacture of a sheet of paper and/or of board and the like, according to which, before formation of the said sheet, at least three dry strength agents are added to the fibrous suspension, separately or as a mixture, in any order of introduction, at one or more injection points, these three dry strength agents respectively being:
- a first agent corresponding to a (co)polymer having a cationic charge density of greater than 1 meq/g, and introduced into the suspension in a proportion of 100 g/t to 20 000 g/t by weight of active material (polymer) with respect to the dry weight of the fibrous suspension,
- a second agent corresponding to a synthetic organic (co)polyner having a cationic charge density of greater than 0.1 meq/g, and introduced into the suspension in a proportion of 100 g/t to 20 000 g/t by weight of active material (polymer) with respect to the dry weight of the fibrous suspension, said second agent comprising from 1 to 100 mol% of at least one monomer having a cationic charge chosen from the group containing dimethylaminoethyl acrylate (ADAME) and/or dimethylaminoethyl methacrylate (MADAME), which are quaternized or salified, dimethyldiallylammonium chloride (DADMAC), acrylamidopropyltrimethyl ammonium chloride (APTAC) and/or methacrylamidopropyltrimethylammonium chloride (MAPTAC),
- and a third agent corresponding to a (co)polymer having an anionic charge density of greater than 0.1 meq/g, and introduced into the suspension in a proportion of 100 g/t to 20 000 g/t by weight of active material (polymer) with respect to the dry weight of the fibrous suspension, said third agent comprising from 1 to 100 mol% of:
- at least one anionic monomer having a carboxylic functional group comprising acrylic acid, methacrylic acid, maleic acid, itaconic acid and their salts...,
- and/or an anionic monomer having a sulphonic acid functional group chosen from the group consisting of 2-acrylamido-2-methylpropanesulphonic acid (AMPS), vinylsulphonic acid, methallylsulphonic acid and their salts...
- and/or an anionic monomer having a phosphonic acid functional group,
**characterized in that** the first agent exhibits primary gamine functional groups and
- either corresponds to a product of Hofmann degradation on a (co)polymer base composed:
- of at least one nonionic monomer chosen from the group consisting of acrylamide, N,N-dimethylacrylamide and/or acrylonitrile,
- and optionally:
■ of at least one unsaturated cationic ethylenic monomer chosen from the group consisting of monomers of dialkylaminoalkyl(meth)acrylamide, diallylamine and methyldiallylamine type and their quaternary ammonium or acid salts,
■ and/or of at least one nonionic monomer chosen from the group consisting of N-vinylacetamide, N-vinylfonnamide, N-vinylpyrrolidone and/or vinyl acetate,
■ and/or of at least one anionic monomer of acid or anhydride type chosen from the groupe consisting of (meth)acrylic acid, acrylamidomethylpropanesulphonic acid, itaconic acid, maleic anhydride, maleic acid, methallylsulphonic acid, vinylsulphonic acid and their salts,
- either obtained by acidic or basic hydrolysis of a (co)polymer base composed:
- of at least one nonionic monomer chosen from the group consisting of N-vinylfonnamide, N-vinylacetamide, N-vinylpyrrolidone and N-vinyl acetate,
- and optionally,
■ of at least one unsaturated cationic ethylenic monomers chosen from the group consisting of monomers of dialkylaminoalkyl(meth)acrylamide, diallylamine and methyldiallylamine type and their quaternary ammonium or acid salts,
■ and/or of at least one nonionic monomer chosen from the group consisting of acrylamide (and/or methacrylamide), N,N-dimethylacrylamide and/or acrylonitrile,
■ and/or of at least one anionic monomer of acid or anhydride type chosen from the group consisting of (meth)acrylic acid, acrylamidomethylpropanesulphonic acid, itaconic acid, maleic anhydride, maleic acid, methallylsulphonic acid, vinylsulphonic acid and their salts.

2. Process according to Claim 1, **characterized in that** the Hofmann degradation product is at a concentration of greater than 3.5% and advantageously of greater than 4.5%.

3. Process according to either of Claims 1 or 2, **characterized in that** the (co)polymer base is branched.

4. Process according to one of the preceding claims, **characterized in that** the dry strength first agent is introduced into the suspension in a proportion of 500 g/t to 5000 g/t by weight of active material (polymer) with respect to the dry weight of the fibrous suspension.

5. Process according to Claim 1, **characterized in that** the second agent comprises from 0 to 99 mol% of at least one monomers having a neutral and/or anionic charge.

6. Process according to Claim 5, **characterized in that** the second agent is branched in the presence of a branching agent.

7. Process according to Claim 5, **characterized in that** the branching agent is glyoxal.

8. Process according to Claim 6, **characterized in that** the second agent is not glyoxalated.

9. Process according to Claim 5, **characterized in that**:
- the monomers having a neutral charge are nonionic monomers chosen from the group consisting of acrylamide, methacrylamide, N,N-dimethylacrylamide, N-vinylpyrrolidone, N-vinylacetamide, N-vinylformamide, vinyl acetate, acrylate esters, allyl alcohol...
- the anionic monomers are those having a carboxylic functional group chosen from the group consisting of acrylic acid, methacrylic acid, maleic acid, itaconic acid and their salts...), and those having a sulphonic acid functional group chosen from the group consisting of 2-acrylamido-2-methylpropanesulphonic acid (AMPS), vinylsulphonic acid, methallylsulphonic acid and their salts..., and those having a phosphonic acid functional group.

10. Process according to one of the preceding claims, **characterized in that** the dry strength second agent is introduced into the suspension in a proportion of 500 g/t to 5000 g/t by weight of active material (polymer) with respect to the dry weight of the fibrous suspension.

11. Process according to Claim 1, **characterized in that** the third agent comprises from 0 to 99 bol% of at least one monomer having a neutral and/or cationic charge.

12. Process according to Claim 11, **characterized in that** the third agent is branched in the presence of a branching agent.

13. Process according to Claim 12, **characterized in that** the branching agent is glyoxal.

14. Process according to Claim 11, **characterized in that**:
- the monomers having a neutral charge are nonionic monomers chosen from the group consisting of acrylamide, methacrylamide, N,N-dimethylacrylamide, N-vinylpyrrolidone, N-vinylacetamide, N-vinylfonuamide, vinyl acetate, acrylate esters, allyl alcohol...,
- the cationic monomers are chosen from the group consisting of dimethylaminoethyl acrylate (ADAME) and/or dimethylaminoethyl methacrylate (MADAME), which are quatemized or salified, dimethyldiallylammonium chloride (DADMAC), acrylamidopropyltrimethyl ammonium chloride (APTAC) and/or methacrylamidopropyltrimethylammonium chloride (MAPTAC),

15. Process according to one of the preceding claims, **characterized in that** the third agent is introduced into the suspension in a proportion of 500 g/t to 5000 g/t by weight of active material (polymer) with respect to the dry weight of the fibrous suspension.

16. Process according to Claim 1, **characterized in that** the first, second and third agents are introduced into the fibrous suspension in a proportion of 0.01 to 2% by weight of polymer active material with respect to the dry weight of the fibrous suspension.

## Patentansprüche

1. Verfahren zur Herstellung eines Blatts aus Papier und/oder aus Karton und dergleichen, bei dem vor Bildung des Blatts an einem oder an mehreren Beaufschlagungspunkten mindestens drei Trockenfestmittel getrennt oder als Gemisch der Fasersuspension in einer beliebigen Beaufschlagungsreihenfolge zugesetzt werden, und zwar:
- ein erstes Mittel, das einem Polymer bzw. Copolymer mit einer kationischen Ladungsdichte von über 1 meq/g entspricht und in Höhe von 100 g bis 20.000 g Gewicht des aktiven Materials (Polymers) pro Tonne Trockengewicht der Fasersuspension dieser zugesetzt wird,
- ein zweites Mittel, das einem organischen synthetischen Polymer bzw. Copolymer mit einer kationischen Ladungsdichte vorn über 0,1 meq/g entspricht und in Höhe von 100 g bis 20.000 g Gewicht des aktiven Materials (Polymers) pro Tonne Trockengewicht der Fasersuspension dieser zugesetzt wird, wobei das zweite Mittel 1 bis 100 Molprozent mindestens eines Monomeres mit einer kationischen Ladung enthält, das aus der Gruppe gewählt ist, die quaternisiertes oder versalzten Dimetyhlaminoethylacrylat (ADAME) und/oder Dimethylaminoethylmethacrylat (MADAME), Dimethyldiallylammoniumchlorid (DADMAC), Acrylamidopropyltrimethylammoniumchlorid (APTAC) und/oder Methacrylamidopropyl-trimethylammoniumchlorid (MAPTAC) umfasst, und
- ein drittes Mittel, das einem Polymer bzw. Copolymer mit einer anionischen Ladungsdichte von über 0,1 meq/g entspricht und in Höhe von 100 g bis 20.000 g Gewicht des aktiven Materials (Polymers) pro Tonne Trockengewicht der Fasersuspension dieser zugesetzt wird, wobei das dritte Mittel 1 bis 100 Molprozent
• mindestens eines anionischen Monomers mit einer Carboxylfunktion, das aus der Gruppe gewählt ist, die Acrylsäure, Methacrylsäure, Maleinsäure, Itaconsäure und deren Salze, ... umfasst, und/oder
• eines anionischen Monomeres mit einer Sulfonsäurefunktion, das aus der Gruppe gewählt ist, die 2-Acrylamido-2-Methylpropansulfonsäure (AMPS), Vinylsulfonsäure, Methallylsulfonsäure und deren Salze, ... umfasst, und/oder
• mindestens eines anionischen Monomeres mit einer Phosphonsäurefunktion enthält, **dadurch gekennzeichnet, dass** das erste Mittel Primäraminfuktionen aufweiset und entweder einen Produkt aus dem Hofmann-Abbau an einem Basenpolymer bzw. Basencopolymer entspricht, das
- aus mindestens einem nicht-ionischen Monomer, das aus der Gruppe gewählt ist, die Acrylamid und/oder Methacrylamid, N,N-Dimethylacrylamid und/oder Acrylonitril umfasst,
- und eventuell
• aus mindestens einen ethylenischen kationischen nicht gesättigten Monomer, das aus der Gruppe gewählt ist, welche die Monomers des Typs Dialkylaminoalkyl(meth)acrylamid, Diallylamin, Methyldiallylamin und deren quaternäre Ammoniumsalze oder Säuresalze umfasst, und/oder
• aus mindestens einen nicht-ionischen Monomer, das aus der Gruppe gewählt ist, die N-Vinylacetamid, N-Vinylformamid, N-Vinylpyrrolidon und/oder Vinylacetat umfasst, und/oder
• aus mindestens einem anionischen Monomer des Typs einer Säure oder eines Anhydrid, das beispielsweise aus der Gruppe gewählt ist, die Methacrylsaure, Acrylamidomethylpropansulfonsäure, Itaconsäure, Maleinanhyrid, Maleinsäure, Methallylsulfonsäure, Vinylsulfonsäure und deren Salze umfasst,
besteht,
oder durch Säure- oder Basenhydrolyse eines Basenpolymers bzw. Basencopolymers gewonnen wird, das:
- aus mindestens einem nicht-ionischen Monomer, das aus der Gruppe gewählt ist, die N-Vinylformamid, N-Vinylacetamid, N-Vinylpyrrolidon und/oder N-Vinylacetat umfasst, und eventuell
• aus mindestens einem ethylenischen kationischen nicht gesättigten Monomer, das aus der Gruppe gewählt ist, welche die Monomere des Typs Dialkylaminoalkyl(meth)acrylamid, Diallylamin, Methyldiallylamin und deren quaternäre Ammoniumsalze oder Säuresalze umfasst, und/oder
• aus mindestens einem nicht-ionischen Monomer, das aus der Gruppe gewählt ist, die Acrylamid (und/oder Methacrylamid), N,N-Dimethylacrylamid und/oder Acrylonitril umfasst, und/oder
• aus mindestens einem anionischen Monomer des Typs einer Säure oder eines Anhydrids, das beispielsweise aus der Gruppe gewählt ist, die (Meth)Acrylsäure, Acrylamidomethylpropansulfonsäure, Itaconsäure, Maleinanhyrid, Maleinsäure, Methallylsulfonsäure, Vinylsulfonsäure und deren Salze umfasst,
besteht.

2. Verfahren nach Anspruch 1, **dadurch gekennzeichnet, dass** das Hofmann-Abbauprodukt eine Konzentration von über 3,5 % und vorteilhafterweise von über 4,5 % aufweist.

3. Verfähren nach einen der Ansprüche 1 oder 2, **dadurch gekennzeichnet, dass** das Basenpolymer bzw. Basencopolymer verzweigt ist.

4. Verfahren nach einem der vorhergehenden Ansprüche, **dadurch gekennzeichnet, dass** das erste Trockenfestmittel in Höhe von 500 g bis 5.000 g Gewicht des aktiven Materials (Polymers) pro Tonne Trockengewicht der Fasersuspension dieser zugesetzt wird,

5. Verfahren nach Anspruch 1, **dadurch gekennzeichnet, dass** das zweite Mittel 0 bis 99 Molprozent mindestens eines Monomeres mit einer neutralen und/oder anionischen Ladung enthält.

6. Verfähren nach Anspruch 5, **dadurch gekennzeichnet, dass** das zweite Mittel in Anwesenheit eines Verzweigungsmittels verzweigt wird.

7. Verfahren nach Anspruch 6, **dadurch gekennzeichnet, dass** es sich bei dem Verzweigungsmittel um Glyoxal handelt.

8. Verfahren nach Anspruch 5, **dadurch gekennzeichnet, dass** das zweite Mittel nicht glyoxaliert ist.

9. Verfahren nach Anspruch 5, **dadurch gekennzeichnet, dass**
- die Monomers mit einer neutralen Ladung nicht-ionische Monomere sind, die aus der Gruppe gewählt sind, die Acrylamid, Methacrylamid, N,N-Dimethylacrylamid, N-Vinylpyrrolidon, N-Vinylacetamid, N-Vinylformamid, Vinylacetat, Acrylatester, Allylalkohol, ... umfasst,
- es sich bei den anionischen Monomeren um diejenigen mit einer Carboxylfunktion handelt, die aus der Gruppe gewählt sind, die Acrylsäure, Methacrylsäure, Mafeinsäure, Itaconsäure und deren Salze, ...umfasst, um diejenigen mit einer Sulfonsäurefunktion, die aus der Gruppe gewählt sind, die 2-Acrylamido-2-Methylpropansulfonsäure (AMPS), Vinylsulfonsäure, Methallylsulfonsäure und deren Salze, ... umfasst, und um diejenigen mit einer Phosphonsäurefunktion.

10. Vorfahren nach seinem der vorhergehenden Ansprüche, **dadurch gekennzeichnet, dass** das zweite Trockenfestmittel in Höhe von 500 g bis 5.000 g Gewicht des aktiven Materials (Polymers) pro Tonne Trockengewicht der Fasersuspension dieser zugesetzt wird.

11. Verfahren nach Anspruch 1, **dadurch gekennzeichnet, dass** das dritte Mittel 0 bis 99 Molprozent mindestens eines Monomers mit einer neutralen und/oder kationischen Ladung enthält.

12. Verfahren nach Anspruch 11, **dadurch gekennzeichnet, dass** das dritte Mittel in Abwesenheit eines Verzweigungsmittels verzweigt wird.

13. Verfahren nach Anspruch 12, **dadurch gekennzeichnet, dass** es sich bei dem Verzweigungsmittel um Glyoxal handelt.

14. Verfahren nach Anspruch 11, **dadurch gekennzeichnet, dass**
- es sich bei den Monomeren mit einer neutralen Ladung um nicht-ionischen Monomeren handelt, die aus der Gruppe gewählt sind, die Acrylamid, Methacrylamid, N,N-Dimethylacrylamid, N-Vinylpyrrolidon, N-Vinylacetamid, N-Vinylformamid, Vinylacetat, Acrylatester, Allylalkohol, ... umfasst,
- die kationischen Monomere aus der Gruppe gewählt sind, die quaternisiertes oder versatzes Dimetyhlaminoethylacrylat (ADAME) und/oder Dimethylaminoethylmethacrylat (MADAME), Dimethyldiallylammoniumchlorid (DADMAC), Acrylamidopropyltrimethylammoniumchlorid (APTAC) und/oder Methacrylamidopropyl-trimethylammoniumchlorid (MAPTAC) umfasst.

15. Verfahren nach einem der vorhergehenden Ansprüche, **dadurch gekennzeichnet, dass** das dritte Trockenfestmittel in Höhe von 500 g bis 5.000 g Gewicht des aktiven Materials (Polymers) pro Tonne Trockengewicht der Fasersuspension dieser zugesetzt wird

16. Verfahren nach Anspruch 1, **dadurch gekennzeichnet, dass** das erste, das zweite und das dritte Mittel in Höhe von 0,01 bis 2 Gew.-% des aktiven Polymermaterials in Bezug auf das Trockengewicht der Fasersuspension dieser zugesetzt werden.
